Europäisches Patentamt

European Patent Office

Office européen des brevets

(19)

(11) EP 0 841 758 A1

(12) DEMANDE DE BREVET EUROPEEN

(43) Date de publication:
13.05.1998 Bulletin 1998/20

(51) Int Cl.⁶: H04B 7/015, H04B 3/23

(21) Numéro de dépôt: 97470024.7

(22) Date de dépôt: 22.10.1997

(84) Etats contractants désignés:
AT BE CH DE DK ES FI FR GB GR IE IT LI LU MC
NL PT SE
Etats d'extension désignés:
AL LT LV RO SI

(30) Priorité: 06.11.1996 FR 9613712

(71) Demandeur: TELEDIFFUSION DE FRANCE SA
75932 Paris Cédex 15 (FR)

(72) Inventeurs:
• Jahan, Bruno
57950 Montigny.Les.Metz (FR)
• Bourcet, Patrice
57070 Mey (FR)

(74) Mandataire: Schmit, Christian Norbert Marie
Cabinet Ballot-Schmit,
18 Place du Forum
57000 Metz (FR)

(54) **Procédé d'annulation d'écho pour signal radio modulé à enveloppe constante et dispositifs associés**

(57) Procédé de correction d'écho et dispositifs associés destiné à supprimer les échos sur les signaux radio émis en modulation à enveloppe constante. Le procédé extrait le signal utile par soustraction d'un écho prévu à un signal d'entrée et extrait un écho réel, par soustraction du signal utile au signal d'entrée et produit un prochain écho par filtrage d'une partie du signal utile à l'aide d'un filtre remis à jour afin de minimiser l'erreur entre l'écho réel et l'écho prévu.

FIG_1

## Description

L'invention a pour objet un procédé d'annulation d'écho pour signal radio modulé à enveloppe constante et des dispositifs associés au procédé. L'invention traite plus particulièrement les signaux émis en modulation de fréquence.

L'invention est particulièrement adaptée pour la réception d'émission radio sur la bande FM, notamment en FM synchrone. L'invention est également utilisable pour tous les types de transmission radio utilisant la modulation de fréquence ou la modulation de phase.

Dans les transmissions utilisant les ondes radio, un problème connu est celui des interférences provoquées par le signal émis, couramment appelées échos. la cause de ces échos peut provenir de la réflexion du signal radio sur certains matériaux ou d'interférence entre émetteurs synchronisés (FM synchrone). Pour les émissions de radio grand public, cela se traduit par une légère distorsion que tout le monde peut constater sur son autoradio dans certaines conditions (proximité d'un poids lourd, entrée de tunnel, changement d'émetteur utilisant la FM synchrone sur autoroute,...). Actuellement, aucune solution n'a permis de remédier à ces problèmes sur des émissions analogiques.

En réponse aux problèmes de transmission dus aux échos, il est actuellement question d'utiliser des modulations de type numérique, par exemple le GSM pour le téléphone et le DAB (Digital Audio Broadcasting) pour la radiodiffusion, les problèmes d'interférences étant plus facile à traiter. En effet, en transmission numérique, l'utilisation de symboles autorise une erreur à la réception correspondant à l'écart entre les différents symboles. De plus il est possible d'utiliser des codes correcteurs d'erreur plus ou moins performant suivant le taux d'erreur moyen du canal utilisé. Des traitements numériques sur le signal reçu sont possibles. Pour le GSM, une salve de symbole connu à l'avance est échangée régulièrement entre émetteur et récepteur pour pouvoir déterminer l'écho et le corriger. Il existe également un Algorithme à module constant CMA (Constant Modulus Algorithme) qui permet de minimiser l'importance des interférences. La transposition du CMA pour les transmissions analogiques permet de corriger partiellement les échos de faible amplitude et devient totalement inefficace au-delà d'un certain seuil d'écho.

L'invention propose un procédé et des dispositifs associés permettant de supprimer les échos d'un signal radio utilisant la modulation à enveloppe constante et notamment en modulation de fréquence analogique. Afin de pouvoir utiliser des possibilités de traitement importantes, le signal analogique est échantillonné et numérisé à la réception. Le procédé corrige à chaque échantillonnage du signal analogique le signal échantillonné pour prévoir l'écho intervenant lors de la prochaine période d'échantillonnage.

L'invention a pour objet un procédé d'annulation d'écho sur un signal modulé en modulation à enveloppe constante, caractérisé en ce qu'il comporte les étapes suivantes :

- production d'un signal utile par soustraction d'un écho prévu à un signal d'entrée et introduction d'une non linéarité entre l'amplitude et la phase;
- production d'un écho réel par soustraction du signal utile au signal d'entrée;
- production d'un signal représentatif de l'erreur existante entre l'écho prévu et l'écho réel;
- mise à jour d'un filtre adaptatif en fonction du signal représentatif afin de minimiser l'erreur;
- calcul d'un prochain écho par filtrage d'au moins une partie du signal utile dans le filtre adaptatif.

Un tel dispositif présente des difficultés d'accrochage dans certaines conditions. L'invention propose pour y remédier d'ajouter un ou plusieurs filtrages de type passe-bas sur l'amplitude du signal utile, sur l'amplitude de l'écho réel, et/ou sur l'amplitude du prochain écho.

Dans une première variante, le filtrage adaptatif est un filtrage complexe et la totalité du signal utile est filtrée dans le filtre adaptatif pour obtenir le prochain écho. Dans une deuxième variante, le filtrage adaptatif agit uniquement sur la dérivée de la phase du signal utile et le prochain écho est reconstitué avec l'écho réel sur lequel la dérivée de la phase est remplacée par la dérivée de la phase du signal utile qui a été filtrée dans le filtre adaptatif.

Un autre but de l'invention a pour objet un circuit annulateur d'écho pour un signal modulé à enveloppe constante comportant une entrée de signal caractérisé en ce qu'il comporte :

- des premiers moyens de soustraction pour soustraire un écho prévu à un signal d'entrée afin d'obtenir un signal utile;
- des moyens non linéaire pour introduire une non linéarité entre l'amplitude et la phase du signal utile;
- des deuxièmes moyens de soustraction pour soustraire le signal utile au signal d'entrée afin d'obtenir un écho réel;
- des moyens de calcul d'erreur pour obtenir un signal d'erreur représentatif de l'erreur entre l'écho réel et l'écho prévu;
- un filtre adaptatif remis à jour en fonction du signal d'erreur afin de minimiser l'erreur entre l'écho réel et l'écho prévu pour filtrer au moins une partie du signal utile afin d'obtenir un prochain écho.

Une amélioration consiste à rajouter un ou plusieurs filtres passe-bas afin de filtrer l'amplitude du signal utile, l'amplitude de l'écho réel, et/ou l'amplitude du prochain écho.

L'invention porte également sur un récepteur de radio FM, sur un appareil de mesure d'interférence d'ondes radio émises en modulation de fréquence, et sur un appareil de calibration d'émetteur FM synchrone utilisant le procédé d'annulation d'écho ou comportant le circuit d'annulation d'écho.

L'invention sera mieux comprise et d'autres avantages apparaîtront dans la description qui va suivre de modes de réalisation préférés, la description faisant référence aux dessins annexés parmi lesquels:

la figure 1 représente un récepteur de signal radio selon l'invention,

les figures 2 et 3 représentent deux modes de réalisation d'un circuit annulateur d'échos selon l'invention.

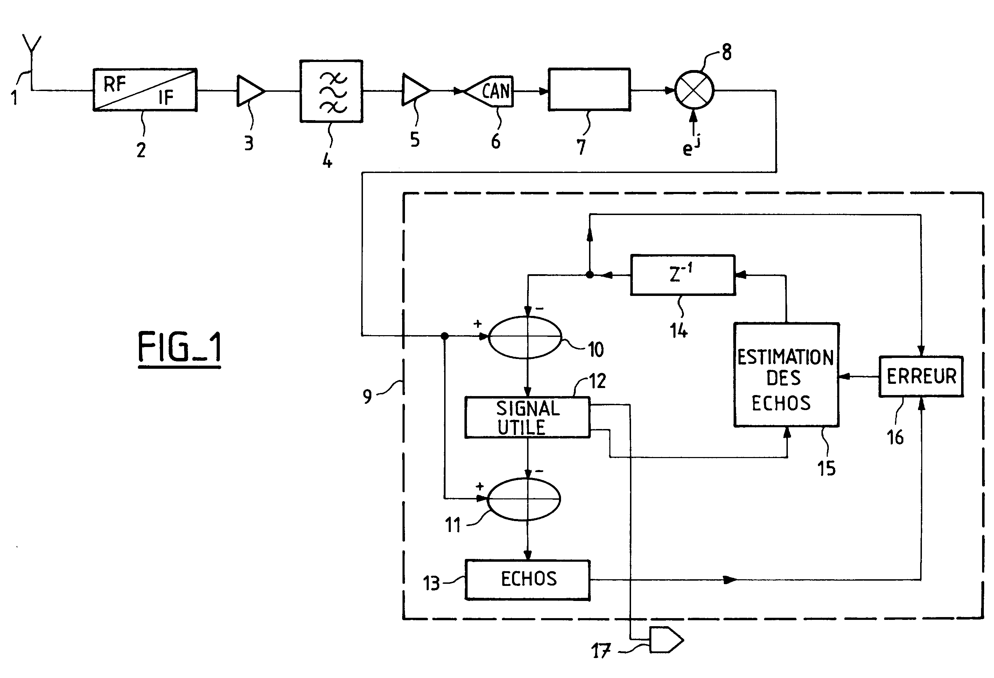

La figure 1 représente un récepteur radio disposant de moyens de suppression d'écho. Ledit récepteur comporte une antenne 1 qui est destinée à recevoir des signaux radio. L'antenne 1 comporte une sortie connectée à une entrée d'un transposeur de fréquence 2 qui comporte en outre une sortie. Le transposeur de fréquence 2 est un élément bien connu de l'homme de l'art, il comporte par exemple un filtre passe-bande, un synthétiseur de fréquence, un mélangeur, et un filtre passe-bas. Dans le cas d'un récepteur de type bande FM, le signal en sortie du transposeur 2 sera composé par exemple d'une partie de la bande FM, transposée de manière à ce qu'autour d'une fréquence intermédiaire, par exemple de 9,9 MHz, se situe la station de radio que l'on désire démoduler. Un premier amplificateur 3, ayant une entrée et une sortie, a son entrée connectée à la sortie du transposeur de fréquence 2. Un filtre passe-bande 4, ayant une entrée et une sortie, a son entrée connectée à la sortie du premier amplificateur 3. Dans un exemple, la bande du filtre est de 300 kHz centrée sur la fréquence intermédiaire. Un deuxième amplificateur 5, ayant une entrée et une sortie, a son entrée connectée à la sortie du filtre 4. Un convertisseur analogique numérique 6, ayant une entrée analogique et un bus de sortie numérique qui fournit un signal numérique échantillonné à chaque période d'une fréquence d'échantillonnage, par exemple 1,2 MHz, a son entrée connectée à la sortie du deuxième amplificateur 5. L'échantillonnage a pour effet de transposer la fréquence intermédiaire à une fréquence de transposition, par exemple de 300 kHz, par repliement du spectre.

La fréquence intermédiaire, la largeur de bande du filtre 4, et les gains des amplificateurs 3 et 5 sont des paramètres à choisir en fonction du signal que l'on désire recevoir et de la fréquence d'échantillonnage à laquelle le convertisseur analogique-numérique numérise le signal. En fonction des différents choix, la chaîne de réception précédemment décrite peut être remplacée par de nombreuses variantes connues de l'homme de métier. Ce qui est nécessaire à l'invention, c'est d'obtenir un signal numérique exploitable, c'est à dire représentatif du signal que l'on désire recevoir.

Un circuit analytique 7, ayant un bus d'entrée connecté au bus de sortie du convertisseur 6 et un bus de sortie, sert à transformer le signal numérique échantillonné reçu à son entrée en un signal numérique complexe du type $x + jy$. Plusieurs possibilités sont envisageables pour la réalisation dudit circuit analytique 7, on peut par exemple utiliser un filtre de Hilbert (ou filtre de quadrature) et un circuit retardateur, par exemple de type FIFO, le retard étant égal à la profondeur du filtre de Hilbert, le circuit retardateur produisant x et le filtre de Hilbert produisant y. Dans le cas où l'on utilise un filtre de Hilbert, on réalisera celui-ci afin d'obtenir le minimum d'erreur sur la phase. L'homme de métier pourra remarquer que le choix de la fréquence de transposition influe sur la complexité du filtre de Hilbert.

Un multiplieur complexe 8, ayant deux bus d'entrée et un bus sortie a un de ses bus d'entrée connecté au bus de sortie du circuit analytique 7 et l'autre des bus d'entrée connecté à un générateur complexe fournissant un signal de type $e^{-2\pi jf't} = \cos(2\pi f't) - j\sin(2\pi f't)$, où f' est une fréquence égale à la fréquence d'échantillonnage divisée par quatre. Le multiplieur complexe 8 permet de transposer le signal à la fréquence nulle.

Un circuit annulateur d'écho 9 possède un bus d'entrée, connecté au bus de sortie du multiplieur 8, et un bus de sortie. Une borne de sortie 17 est connectée au bus de sortie du circuit annulateur d'écho 9. Cette borne de sortie communique avec le reste d'un récepteur FM classique.

Le circuit annulateur d'écho 9 comporte :

- des premier et deuxième soustracteurs complexes 10 et 11, ayant chacun des première et deuxième entrées et une sortie, la sortie fournissant un signal numérique égale à la différence complexe entre les première et deuxième entrées, chacune des premières entrées étant connectée au bus d'entrée du circuit annulateur d'écho,

- un circuit de traitement du signal utile 12, ayant une entrée et des sorties fournissant le signal utile sous différentes formes de représentation complexe, l'entrée dudit circuit de traitement 12 étant connectée à la sortie du premier soustracteur complexe 10, et une sortie dudit circuit de traitement 12 étant connectée à la deuxième entrée du deuxième soustracteur complexe 11, une autre sortie dudit circuit de traitement 12, fournissant uniquement la phase du signal utile, étant connectée à la sortie du circuit annulateur d'écho 9,

- un circuit d'extraction d'écho réel 13 servant à mettre en forme l'écho réel et ayant une entrée et une sortie, l'entrée dudit signal d'extraction étant connectée à la sortie du deuxième soustracteur complexe 11,

- un circuit retardateur 14 servant à retarder des mots d'une période d'échantillonnage et possédant une entrée et une sortie, la sortie étant connectée à la deuxième entrée du premier soustracteur complexe 10,

- un circuit d'estimation d'écho 15 servant à prévoir l'écho de la prochaine période d'échantillonnage et ayant une entrée de signal, une entrée de correction et une sortie, l'entrée de signal étant connectée à l'une des sorties du circuit de traitement 12, et la sortie étant connectée à l'entrée du circuit retardateur 14,

- un circuit de calcul d'erreur 16 évaluant l'erreur entre l'écho prévu et l'écho réel et ayant des première et deuxième entrées et une sortie, la première entrée étant connectée à la sortie du circuit d'extraction 13, la deuxième entrée étant connectée à la sortie du circuit retardateur 14, et la sortie étant connectée à l'entrée de correction du circuit d'estimation 15.

Les circuits de traitement 12 et d'extraction 13 servent à transposer les signaux numériques d'une représentation cartésienne à une représentation polaire et inversement afin de simplifier les différents calculs. De plus, ces circuits servent à introduire des non linéarités entre l'amplitude et la phase du signal utile et écho réel. En fait, seul le circuit 12 est vraiment nécessaire, le circuit d'extraction peut être supprimé s'il n'est pas nécessaire de changer de coordonnées pour l'écho réel.

En ce qui concerne le fonctionnement de ce circuit annulateur d'écho 9, on produit un signal utile en soustrayant dans le soustracteur 10 un écho prévu issu du circuit retardateur 14 au signal entrant dans le circuit annulateur d'écho 9. Le signal utile est lui-même soustrait au signal entrant dans le circuit annulateur d'écho 9 afin d'obtenir l'écho réel. Par ailleurs, on récupère la phase du signal utile pour obtenir le signal modulé en fréquence, par exemple à l'aide d'une boucle à verrouillage de phase. Le circuit d'estimation d'écho 15 va déterminer quel sera l'écho qui correspondra à la prochaine période d'échantillonnage à l'aide d'un filtre adaptatif qui est corrigé à chaque période en fonction de la différence entre l'écho réel et l'écho prévu.

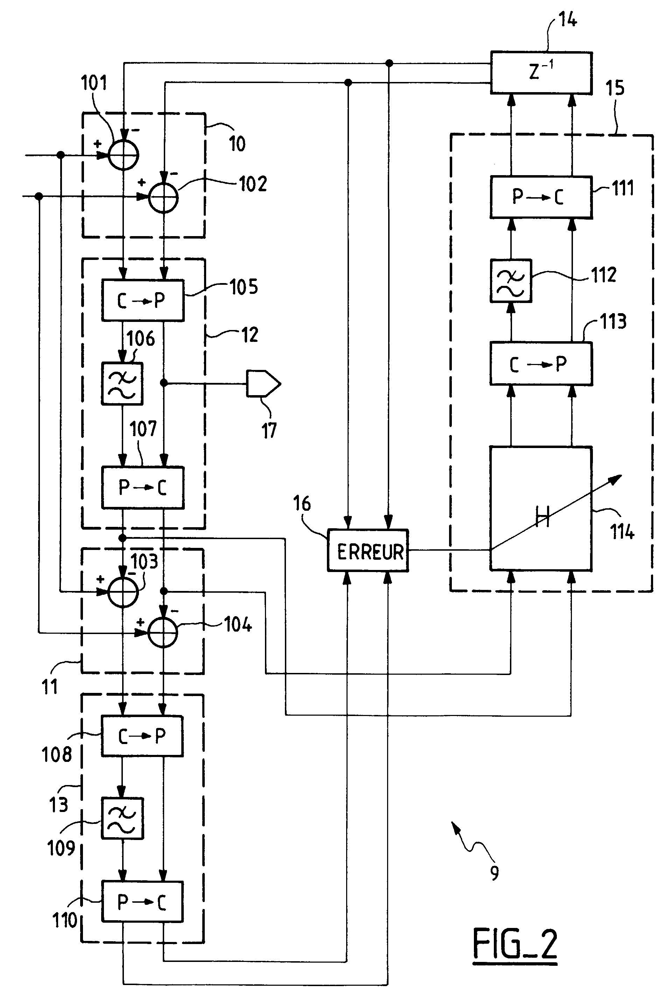

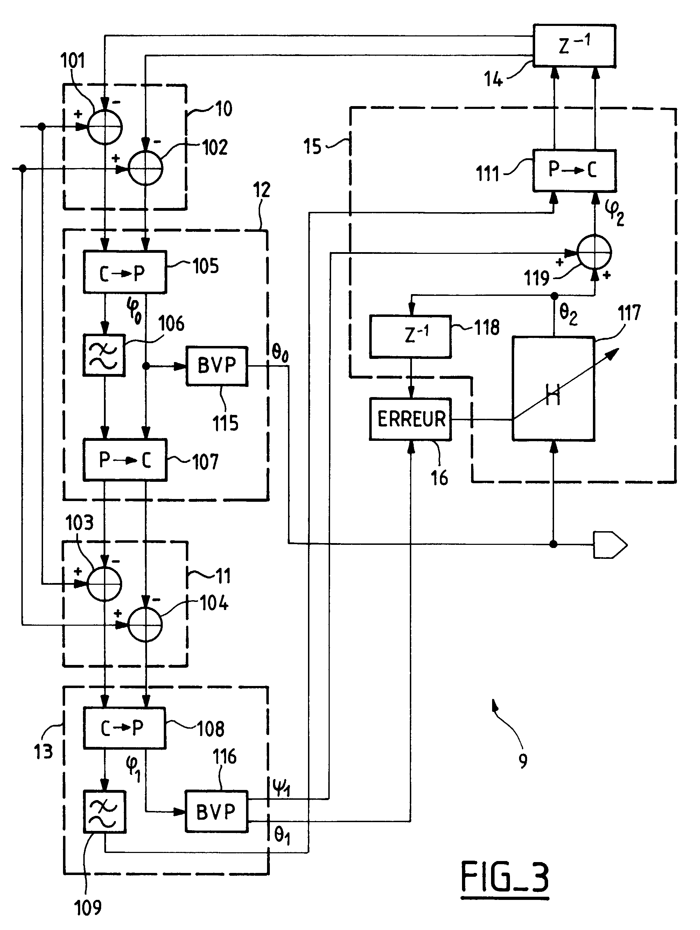

Tel que précédemment décrit, la différence entre l'écho réel et l'écho prévu dépend essentiellement des arrondis fait lors des différents calculs. La convergence du dispositif est de ce fait relativement longue voire inexistante dans certains cas. Pour améliorer la convergence et réduire la phase transitoire, des éléments ont été rajoutés dans ces circuits sur les exemples de réalisation des figures 2 et 3.

Pour la réalisation matérielle du circuit annulateur d'écho 9, il est possible d'utiliser par exemple des composants programmables ou des circuits microprogrammés utilisant des DSP (Digital Signal Processor) sur lesquels les circuits décrits ultérieurement seront implémentés.

La figure 2 représente un premier mode préféré de réalisation du circuit annulateur d'écho 9 dans lequel les différents éléments du circuit annulateur d'écho 9 sont plus détaillés. De plus les différents bus portant les signaux complexes ont été séparés en deux bus qui correspondent suivant les cas soit aux coordonnées cartésiennes x et y (partie réelle et partie imaginaire) soit aux coordonnées polaires A et Φ (amplitude et phase).

Les premier et deuxième soustracteurs complexes 10 et 11 sont identiques sur cette figure 2. Chacun de ces soustracteurs complexes comporte des premier et deuxième circuits de soustraction 101 et 102, respectivement 103 et 104 disposés en parallèle. Le premier circuit de soustraction 101 (ou 103) est connecté aux bus qui transportent la partie réelle des signaux complexes. Le deuxième circuit de soustraction 102 (ou 104) est connecté aux bus qui transportent la partie imaginaire des signaux complexes.

Le circuit de traitement du signal utile 12 comporte un convertisseur cartésien-polaire 105 ayant deux entrées et deux sorties, un filtre passe-bas 106 ayant une entrée et une sortie, et un convertisseur polaire-cartésien 107 ayant deux entrées et deux sorties. Les deux entrées du convertisseur cartésien-polaire 105 sont connectées aux sorties des circuits de soustraction 101 et 102 du premier soustracteur complexe 10 afin de recevoir la partie réelle et la partie imaginaire d'un signal complexe correspondant au signal utile, c'est à dire au signal d'entrée du circuit d'annulation d'écho 9 auquel on a ôté un écho calculé à la période d'échantillonnage précédente. Les deux sorties du convertisseur cartésien-polaire 105 fournissent respectivement des informations numériques représentant l'amplitude et la phase. Le filtre passe-bas 106 a son entrée connectée à la sortie du convertisseur cartésien-polaire 105 qui correspond à l'amplitude. Le convertisseur polaire-cartésien 107 a ses entrées connectées d'un part à la sortie du filtre passe-bas 106 et d'autre part à la sortie de phase du convertisseur cartésien-polaire 105. Les deux sorties du convertisseur polaire-cartésien 107 fournissent des informations numériques représentant respectivement la partie réelle et la partie imaginaire du signal.

Sur cette figure 2, le circuit de traitement 12 dispose d'une sortie de phase connectée à la sortie de phase du convertisseur cartésien-polaire 105, cette sortie de phase étant connectée à la borne de sortie 17 et de deux sorties cartésiennes connectées aux sorties du convertisseur polaire-cartésien 107, ces deux sorties cartésiennes étant connectées aux entrées des circuits de soustraction 103 et 104 du deuxième soustracteur complexe 11.

Le circuit d'extraction d'écho réel 13 comporte un convertisseur cartésien-polaire 108 ayant deux entrées et deux sorties, un filtre passe-bas 109 ayant une entrée et une sortie, et un convertisseur polaire-cartésien 110 ayant deux entrées et deux sorties. Les deux entrées du convertisseur cartésien-polaire 108 sont connectées aux sorties des circuits de soustraction 103 et 104 du deuxième soustracteur complexe 11 afin de recevoir la partie réelle et la partie imaginaire d'un signal complexe correspondant à l'écho réel, c'est à dire au signal d'entrée du circuit d'annulation d'écho 9 auquel on a ôté le signal utile. Les deux sorties du convertisseur cartésien-polaire 108 fournissent respectivement des informations numériques représentant l'amplitude et la phase. Le filtre passe-bas 109 a son entrée connectée à la sortie du convertisseur cartésien-polaire 108 qui correspond à l'amplitude. Le convertisseur polaire-cartésien 110 a ses entrées connectées d'un part à la sortie du filtre passe-bas 109 et d'autre part à la sortie de phase du convertisseur cartésien-polaire 108. Les deux sorties du convertisseur polaire-cartésien 110 fournissent respectivement des informations numériques représentant les parties réelle et imaginaire du signal.

Sur cette figure 2, le circuit d'extraction 13 sert uniquement à filtrer l'amplitude de l'écho. Par ailleurs l'homme du métier remarquera que le circuits d'extraction sert uniquement à introduire une non linéarité entre l'amplitude et la phase de l'écho réel par filtrage de l'amplitude de l'écho et peut être supprimé.

Le circuit retardateur 14 comporte deux entrées et deux sorties. Les données fournies en sortie sont retardées d'au moins un cycle d'horloge par rapport aux données reçues en entrée. Ce circuit retardateur 14 peut être constitué par exemple de deux registres en parallèle. les deux sorties du circuits retardateur 14 sont connectées aux entrées des circuit de soustraction 101 et 102 du premier soustracteur 10.

Le circuit d'estimation d'écho 15 comporte un convertisseur polaire-cartésien 111 ayant deux entrées et deux sorties, un filtre passe-bas 112 ayant une entrée et une sortie, un convertisseur cartésien-polaire 113 ayant deux entrées et deux sorties, et un filtre adaptatif 114 ayant deux entrées de signal, deux sorties de signal et une entrée de correction. Le convertisseur polaire-cartésien 111 a ses entrées connectées d'un part à la sortie du filtre passe-bas 112 et d'autre part à la sortie de phase du convertisseur cartésien-polaire 113. Les deux sorties du convertisseur polaire-cartésien 110 fournissent des informations numériques représentant respectivement la partie réelle et la partie imaginaire du signal aux entrées du circuit retardateur 14.

Les deux sorties du convertisseur cartésien-polaire 113 fournissent respectivement des informations numériques représentant l'amplitude et la phase. Le filtre passe-bas 112 a son entrée connectée à la sortie du convertisseur cartésien-polaire 113 qui correspond à l'amplitude.

Les deux entrées du convertisseur cartésien-polaire 113 sont connectées aux sorties de signal du filtre adaptatif 114 afin de recevoir la partie réelle et la partie imaginaire d'un signal complexe correspondant à l'écho prévu pour le cycle d'échantillonnage suivant.

Le filtre adaptatif 114 a ses entrées de signal connectées aux sorties du convertisseur polaire-cartésien 107 et son entrée de correction connectée à une sortie du circuit de calcul d'erreur 16.

Le circuit de calcul d'erreur 16 possède deux couples d'entrées de signal et une sortie. La sortie fournit une information représentative de l'erreur existant entre chacun des couples de signaux d'entrée présent sur ses couples d'entrées.

La borne de sortie 17 est connectée à la sortie du convertisseur cartésien-polaire 105 qui correspond à la phase. L'homme du métier pourra ensuite extraire le signal modulé en fréquence à l'aide d'une boucle à verrouillage de phase classique à partir du signal fourni à cette borne.

Les filtres passe-bas 106, 109 et 112 servent à éliminer les brusques variations d'amplitude qui sont hors de la bande passante du signal qui ont été provoquées entre autre par les soustracteurs 10 et 11 ou par le filtre adaptatif 114 lors d'une phase transitoire. Ces filtres passe-bas servent également à introduire une non linéarité entre les amplitudes et les phases des signaux sur lesquels ils s'appliquent. La fréquence de coupure des filtres 106, 108 et 112 infue sur la durée de la période transitoire. Il n'est pas nécessaire d'avoir trois filtres, les filtres 108 et 112 peuvent être supprimés. De plus, les éléments 111 à 113 peuvent être intégrés dans le filtre adaptatif 114. Le filtre adaptatif 114 possède des coefficients qui sont remis à jour à chaque cycle d'échantillonnage afin de minimiser l'erreur. On peut, par exemple, utiliser l'algorithme du gradient.

Dans la réalisation préférée de la figure 2, la correction d'erreur se déroule ainsi à chaque cycle d'échantillonnage :

1) calcul du signal utile dans le premier soustracteur complexe 10 par soustraction de l'écho prévu du cycle d'échantillonnage au signal présent sur le bus d'entrée du circuit annulateur d'écho 9;

2) calcul de l'écho réel dans le deuxième soustracteur complexe 11 par soustraction du signal utile, dont l'amplitude a été filtrée, au signal présent sur le bus d'entrée du circuit annulateur d'écho 9;

3) calcul de l'erreur, entre l'écho réel et l'écho prévu, et fourniture d'un signal complexe $\Delta$ représentatif de l'erreur dans le circuit de calcul d'erreur 16, dans notre exemple $\Delta = \delta$ * (écho prévu - écho réel), $\delta$ étant un coefficient de convergence de l'algorithme du gradient, l'écho réel étant filtré.

4) mise à jour des coefficients Ai et Bi du filtre adaptatif selon l'algorithme du gradient, c'est-à-dire de la manière suivante :

$$(Ai+jBi)_{(n)} = (Ai+jBi)_{(n-1)} - \Delta * (x_{(n+1-i)} + jy_{(n+1-i)}),$$

n étant l'indice associé au cycle d'échantillonnage en cours, i étant un indice variant de 1 à N, N étant le nombre de coefficient du filtre adaptatif 114, $x_{(k)}$ et $y_{(k)}$ étant respectivement la partie réelle et la partie imaginaire du signal utile aux instants correspondant aux cycles d'échantillonnage indicés par k;

5) calcul du prochain écho dans le filtre adaptatif 114 en faisant la sommation de produit suivante :

$$\text{Echo suivant} = \text{Somme}\ ((Ai+jBi)_{(n)} * (x_{(n+1-i)} + jy_{(n+1-i)})$$

avec i variant de 1 à N.

L'ordre préféré peut être modifié, cependant certaines modifications peuvent entraîner un retard dans la réaction de la boucle ce qui augmente la durée de la phase transitoire et peut également entraîner une moins bonne correction de l'écho.

Ici, l'algorithme du gradient a été utilisé mais il est possible d'utiliser d'autres algorithmes qui visent à minimiser l'erreur.

De ce fait, le calcul de l'erreur et la mise à jour des coefficients du filtre peuvent être différents.

Le filtrage de l'amplitude du signal utile peut être remplacé par un autre traitement introduisant une non linéarité entre l'amplitude et la phase du signal utile. Le filtrage de l'amplitude de l'écho réel peut être supprimé.

L'homme du métier pourra obtenir de bons résultats avec N = 32. Le filtre adaptatif est cependant relativement imposant et nécessite des calculs importants pour changer ses coefficients. Des approximations peuvent être faites afin de réduire les calculs de mise à jour du filtre.

La figure 3 représente un deuxième mode de réalisation préféré dans lequel l'écho est considéré comme peu variant par rapport à une période d'échantillonnage. Si on échantillonne à 1,2 MHz, une période d'échantillonnage dure moins d'une microseconde, la variation de l'écho qui peut par exemple correspondre au temps mis à la longueur d'onde pour parcourir la distance par un véhicule en mouvement est infime. L'approximation faite entraîne donc une erreur négligeable.

La figure 3 comporte des éléments communs avec la figure 2. Les soustracteurs complexes 10 et 11 ainsi que le circuit retardateur 14 restent inchangés par rapport au circuit annulateur d'écho 9 de la figure 2.

Le circuit de traitement 12 de la figure 3 comporte le convertisseur cartésien-polaire 105, le filtre passe-bas et le convertisseur polaire-cartésien 107 décrits précédemment et connectés à l'identique. Une première boucle à verrouillage de phase 115 a été ajoutée. Cette première boucle à verrouillage de phase 115 possède une entrée connectée à la sortie du convertisseur cartésien-polaire 105 qui correspond à la phase $\varphi 0$ du signal utile et une sortie. La première boucle à verrouillage de phase est de type classique, réalisée pour fonctionner avec des signaux discrets et fournit sur sa sortie la dérivée $\theta 0_{(n)}$ de la phase $\varphi 0_{(n)}$ du signal utile à l'instant n.

Le circuit d'extraction 13 de la figure 3 comporte le convertisseur cartésien-polaire 108 et le filtre passe-bas 109 décrit précédemment. Le convertisseur cartésien-polaire 108 est connecté comme précédemment décrit. La sortie du filtre passe-bas 109 est utilisée comme l'une des sorties du circuit d'extraction 13. Le circuit d'extraction 13 comporte une deuxième boucle à verrouillage de phase 116 ayant une entrée et des première et deuxième sorties. L'entrée de la deuxième boucle à verrouillage de phase 116 est connectée à la sortie du convertisseur cartésien-polaire 108 qui correspond à la phase $\varphi 1_{(n)}$ de l'écho réel à la période d'échantillonnage n. La deuxième boucle à verrouillage de phase 116 est de type classique, réalisée pour fonctionner avec des signaux discrets. La première sortie de la boucle à verrouillage de phase 116 fournit la dérivée $\theta 1_{(n)}$ de la phase $\varphi 1_{(n)}$. La deuxième sortie de la deuxième boucle à verrouillage de phase 116 fournit un signal discret $\psi 1_{(n)}$ correspondant à la sortie de l'oscillateur contrôlé, connu sous le nom de V.C.O. (Voltage Control Oscillator), d'une boucle à verrouillage de phase classique. Classiquement on a $\varphi 1_{(n)} = \psi 1_{(n-1)} + \theta 1_{(n)}$.

Le circuit d'estimation d'écho 15 comporte le convertisseur polaire-cartésien 111 dont les sorties sont connectées aux entrées du circuit retardateur 14. Le circuit d'estimation d'écho 15 comporte également un filtre adaptatif 117 ayant une entrée de signal, une entrée de correction et une sortie, un circuit de retard supplémentaire 118 ayant une entrée et une sortie, et un additionneur 119 ayant des première et deuxième entrées et une sortie. L'entrée du convertisseur polaire-cartésien 111 qui correspond à l'amplitude est connectée à la sortie du filtre passe-bas 109, l'amplitude du prochain écho étant ici identique à l'amplitude de l'écho réel. L'entrée du convertisseur polaire-cartésien 111 qui correspond à la phase $\varphi 2_{(n)}$ est connectée à la sortie de l'additionneur 119. La première entrée de l'additionneur 119 est connectée à la deuxième sortie de la deuxième boucle à verrouillage de phase 116. L'entrée du circuit de retard supplémentaire 118 est connectée à la sortie du filtre adaptatif 117. L'entrée de signal du filtre adaptatif 117 est connectée à la sortie de la première boucle à verrouillage de phase 115 de sorte que la correction de l'écho s'effectue sur la dérivée $\theta 0_{(n)}$ de la phase $\varphi 0_{(n)}$ du signal utile qui correspond au signal utile démodulé. On reconstruit ensuite la phase $\varphi 2_{(n)} = \psi 1_{(n)} + \theta 2_{(n)}$.

Le circuit de calcul d'erreur 16 comporte une première entrée connectée à la sortie du circuit de retard supplémentaire 118, une deuxième entrée connectée à la première sortie de la deuxième boucle à verrouillage de phase 116, et une sortie connectée à l'entrée de correction du filtre adaptatif 117. La sortie du circuit de calcul d'erreur 16 fournit une information représentative de l'erreur existant entre les dérivées $\theta 1_{(n)}$ et $\theta 2_{(n-1)}$ des échos réel et prévu.

La borne de sortie 17 est connectée à la sortie de la première boucle à verrouillage de phase 115. Le signal récupéré sur cette borne correspond au signal démodulé.

Là encore, les filtres passe-bas 106 et 109 ont le même rôle que sur la figure 2. Le filtre 109 peut être supprimé.

Le filtre adaptatif 117 possède des coefficients qui sont remis à jour à chaque cycle d'échantillonnage afin de minimiser l'erreur. On peut, par exemple, utiliser l'algorithme du gradient.

Dans la réalisation préférée de la figure 3, la correction d'erreur se déroule à chaque cycle d'échantillonnage de la manière suivante :

1) calcul du signal utile dans le premier soustracteur complexe 10 par soustraction de l'écho prévu du cycle d'échantillonnage au signal présent sur le bus d'entrée du circuit annulateur d'écho 9;

2) calcul de l'écho réel dans le deuxième soustracteur complexe 11 par soustraction du signal utile, dont l'amplitude a été filtrée, au signal présent sur le bus d'entrée du circuit annulateur d'écho 9;

3) calcul de l'erreur entre les dérivées des phases de l'écho réel et de l'écho prévu et fourniture d'un signal représentatif $\Delta$ dans le circuit de calcul d'erreur 16, dans notre exemple :

$\Delta = \delta$ * (phase d'écho prévu - phase d'écho réel), $\delta$ étant un coefficient arbitraire;

4) mise à jour des coefficients Ai du filtre adaptatif selon l'algorithme du gradient, c'est-à-dire de la manière suivante :

$A_{i(n)} = A_{i(n-1)} - \Delta * \theta_{0(n+1-i)}$, n étant l'indice associé au cycle d'échantillonnage en cours, i étant un indice variant entre 1 et N, N étant le nombre de coefficients du filtre adaptatif 117, $\theta_0(k)$ étant la dérivée de la phase du signal utile aux instants correspondant aux cycles d'échantillonnage indicés par k;

5) calcul du prochain écho à l'aide du filtre adaptatif 117, en faisant d'abord la sommation de produit suivante :

$\theta_{2(n)}$ = Somme $(A_i(n) * \theta_{0(n+1-i)})$ avec i variant de 1 à N ; puis en reconstruisant le prochain écho à l'aide de l'écho réel sur lequel l'amplitude a été filtrée et la dérivée de sa phase $\theta_{1(n)}$ a été remplacée par la dérivée de la phase $\theta_{2(n)}$ qui vient d'être calculée dans le filtre adaptatif 117.

L'ordre préféré peut être modifié comme il a été expliqué pour le schéma de la figure 2, il en est de même pour les changements d'algorithmes et la suppression des filtrages.

Par rapport à la figure 2, le filtre adaptatif 117 utilise des coefficients réels et est, de ce fait, beaucoup moins important en taille et nécessite moins de calcul.

D'autres possibilités d'implémentation d'un tel dispositif sont envisageables. Si l'on dispose d'un ordinateur assez puissant, il peut être envisageable de réaliser un programme reprenant l'un des procédés ou une variante et de le traduire en programme d'ordinateur. Pour cela, l'ordinateur devra disposer d'une entrée analogique ou d'un bus pour recevoir le signal modulé.

En ce qui concerne les applications diverses, les récepteurs radio FM sont les premiers appareils sur lesquels le dispositif de l'invention peut être utilisé. Une application secondaire concerne les appareils de mesure d'interférence utilisés pour les signaux radio, notamment les appareils servant à régler les émetteurs FM synchrone.

## Revendications

1. Procédé d'annulation d'écho sur un signal modulé en modulation à enveloppe constante, caractérisé en ce qu'il comporte les étapes suivantes :

   - production d'un signal utile par soustraction d'un écho prévu à un signal d'entrée et introduction d'une non linéarité entre l'amplitude et la phase;
   - production d'un écho réel par soustraction du signal utile au signal d'entrée;
   - production d'un signal représentatif de l'erreur existante entre l'écho prévu et l'écho réel;
   - mise à jour d'un filtre adaptatif (114 ou 117) en fonction du signal représentatif afin de minimiser l'erreur;
   - calcul d'un prochain écho par filtrage d'au moins une partie du signal utile dans le filtre adaptatif (114 ou 117).

2. Procédé selon la revendication 1 caractérisée en ce que l'introduction d'une non linéarité entre l'amplitude et la phase du signal utile est un filtrage de l'amplitude du signal utile réalisé à l'aide d'un filtre passe-bas (106).

3. Procédé selon l'une des revendications 1 ou 2 caractérisée en ce que l'amplitude de l'écho réel est filtrée à l'aide d'un filtre passe-bas (109).

4. Procédé selon l'une des revendications 1 à 3 caractérisée en ce que l'amplitude du prochain écho est filtrée à l'aide d'un filtre passe-bas (112).

5. Procédé selon l'une des revendications 1 à 4 caractérisée en ce que le filtrage adaptatif est un filtrage complexe et en ce que la totalité du signal utile est filtrée dans le filtre adaptatif (114) pour obtenir le prochain écho.

6. Procédé selon l'une des revendications 1 à 3 caractérisée en ce que le filtrage adaptatif agit uniquement sur la dérivée ($\theta_{o(n)}$) de la phase du signal utile ($\varphi_{O(n)}$) et en ce que le prochain écho est reconstitué avec l'écho réel sur lequel la dérivée de la phase ($\theta_{1(n)}$) est remplacée par la dérivée de la phase du signal utile qui a été filtrée ($\theta_{2(n)}$) dans le filtre adaptatif (117).

7. Procédé selon l'une des revendications 1 à 6 caractérisée en ce qu'un algorithme du gradient est utilisé pour la mise à jour du filtre adaptatif.

8. Procédé selon l'une des revendications 1 à 7 caractérisée en ce qu'il est réalisé sur un ordinateur qui émule ledit procédé.

**9.** Récepteur de radio FM utilisant l'un des procédés définis dans l'une des revendications 1 à 8.

**10.** Appareil de mesure d'interférences d'ondes radio modulées en fréquence utilisant l'un des procédés définis dans l'une des revendications 1 à 8.

**11.** Appareil de calibration d'émetteur FM synchrone utilisant l'un des procédés définis dans l'une des revendications 1 à 8.

**12.** Circuit annulateur d'écho (9) pour un signal modulé à enveloppe constante comportant une entrée de signal caractérisé en ce qu'il comporte :

- des premiers moyens de soustraction (10) pour soustraire un écho prévu à un signal d'entrée afin d'obtenir un signal utile;
- des moyens non linéaire (105 à 107) pour introduire une non linéarité entre l'amplitude et la phase du signal utile;
- des deuxièmes moyens de soustraction (11) pour soustraire le signal utile au signal d'entrée afin d'obtenir un écho réel;
- des moyens de calcul d'erreur (16) pour obtenir un signal d'erreur représentatif de l'erreur entre l'écho réel et l'écho prévu;
- un filtre adaptatif (114 ou 117) remis à jour en fonction du signal d'erreur afin de minimiser l'erreur entre l'écho réel et l'écho prévu pour filtrer au moins une partie du signal utile afin d'obtenir un prochain écho.

**13.** Circuit selon la revendication 12 caractérisé en ce que les moyens pour introduire une non linéarité entre l'amplitude et la phase du signal utile comporte un filtre passe-bas (106) pour filtrer l'amplitude du signal utile.

**14.** Circuit selon l'une des revendications 12 ou 13 caractérisé en ce qu'il comporte un filtre passe-bas (109) pour filtrer l'amplitude de l'écho réel.

**15.** Circuit selon l'une des revendications 12 à 14 caractérisé en ce qu'il comporte un filtre passe-bas (112) pour filtrer l'amplitude du prochain écho.

**16.** Circuit selon l'une des revendications 12 à 14 caractérisé en ce qu'il comporte :

- une première boucle à verrouillage de phase (115) pour extraire la dérivée ($\theta 0_{(n)}$) de la phase du signal utile;
- une deuxième boucle à verrouillage de phase (116) pour extraire la dérivée ($\theta 1_{(n)}$) de la phase de l'écho réel;
- des moyens de reconstitution (111, 119) pour reconstituer le prochain écho à partir de l'écho réel sur lequel la dérivée ($\theta 1_{(n)}$) de la phase a été remplacée par la dérivée du signal utile qui a été filtrée dans le filtre adaptatif (117).

**17.** Circuit selon l'une des revendications 12 à 16 caractérisé en ce qu'il est réalisé à l'aide d'un circuit microprogrammé.

**18.** Récepteur de radio FM comportant le circuit défini dans l'une des revendications 12 à 17.

**19.** Appareil de mesure d'interférences radio comportant le circuit défini dans l'une des revendications 12 à 17.

**20.** Appareil de calibration d'émetteur FM synchrone comportant le circuit défini dans l'une des revendications 12 à 17.

# FIG_1

RF / IF

CAN

$e^j$

$z^{-1}$

SIGNAL UTILE

ESTIMATION DES ECHOS

ERREUR

ECHOS

1 2 3 4 5 6 7 8 9 10 11 12 13 14 15 16 17

FIG_2

FIG_3

**Office européen des brevets**

## RAPPORT DE RECHERCHE EUROPEENNE

Numéro de la demande

EP 97 47 0024

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | PATENT ABSTRACTS OF JAPAN<br>vol. 005, no. 063 (E-054), 28 avril 1981<br>& JP 56 013836 A (TOSHIBA CORP), 10 février 1981,<br>* abrégé * | 1,12 | H04B7/015<br>H04B3/23 |
| A | KAMMEYER K ET AL: "A modified adaptive FIR equalizer for multipath echo cancellation in FM transmission"<br>IEEE JOURNAL ON SELECTED AREAS IN COMMUNICATIONS, FEB. 1987, USA,<br>vol. SAC-5, no. 2, ISSN 0733-8716,<br>pages 226-237, XP002035389<br>* page 227, colonne de droite, ligne 8 – page 228, colonne de droite, ligne 27 *<br>* page 230, colonne de droite, ligne 1 – page 231, colonne de gauche, ligne 20 * | 1,12 | |
| A | EP 0 596 610 A (ADVANCED MICRO DEVICES INC) 11 mai 1994<br>* page 3, ligne 19 – page 4, ligne 52; figure 1 * | 1,12 | |

DOMAINES TECHNIQUES RECHERCHES (Int.Cl.6)

H04B

Le présent rapport a été établi pour toutes les revendications

| Lieu de la recherche | Date d'achèvement de la recherche | Examinateur |
|---|---|---|
| LA HAYE | 18 février 1998 | Bossen, M |